# EUROPÄISCHE PATENTANMELDUNG

(11) **EP 0 579 345 A1**
(43) Veröffentlichungstag der Anmeldung: **19.01.1994**
(21) Anmeldenummer: 93250179.4
(22) Anmeldetag: 18.06.1993
(51) Int. Cl.: H04M 11/02

(54) **Türsprechanlage**

(30) Priorität: 24.06.1992 DE 9208466 U
(71) Anmelder: ELMEG GmbH Kommunikationstechnik, D-31228 Peine (DE)
(72) Erfinder: Reinicke, Jochen, Ing.(grad.), D-3150 Peine (DE)
(74) Vertreter: Christiansen, Henning, Dipl.-Ing.

(57) **Zusammenfassung**

Telekommunikationsanlage mit einer Türsprecheinrichtung, die eine Mikrofon/Lautsprecher-Kombination (8), gegebenenfalls einen elektrisch betätigbaren Türöffner (9) und einem, mindestens einen Klingeltaster (10) aufweist, wobei zur Verbindung der Türsprecheinrichtung mit der übrigen Telekommunikationsanlage mittels zweier Leitungsadern erste Schaltmittel vorgesehen sind, welche die beiden Leitungsadern der Türsprecheinrichtung für den Sprechbetrieb von der sonst vorhandenen Versorgung mit Wechselspannung auf eine Versorgung mit Gleichspannung umschalten, welche gegebenenfalls die Sprechwechselspannung überlagert enthält, und wobei in der Türsprecheinrichtung zweite Schaltmittel vorgesehen sind, welche bei vorhandener Versorgungsgleichspannung die Mikrofon/Lautsprecher-Kombination mit den Leitungsadern verbinden.

## Beschreibung

Die Erfindung betrifft eine Telekommunikationsanlage der im Oberbegriff des Anspruchs 1 angegebenen Art.

Türfreisprech- und insbesondere Türfreisprecheinrichtungen (TFE-Einrichtungen) in Form von Gegensprechanlagen sind mit einer, vorzugsweise amtsberechtigten, Telefonanlage innerhalb eines Gebäudes verbunden, um durch die dortigen Teilnehmer über die Fernsprechapparate der Telefonanlage mit Besuchern des Gebäudes am Gebäudeeingang sprechen zu können, nachdem der Besucher über geeignete Vorrichtungen der TFE-Einrichtung, beispielsweise eine tastergesteuerte Signaleinrichtung (Türklingel), dem Teilnehmer seine Eintrittswunsch mitgeteilt hat. Hierfür sind bei herkömmlichen Anlagen zusätzlich zu den Sprechadern auch die Klingelleitungen vorzusehen.

Dies ist nachteilig, wenn die bestehende Klingelanlage eines Gebäudes nachträglich mit einer TFE-Einrichtung ausgerüstet werden soll und üblicherweise am Gebäudeeingang nur eine zweiadrige Leitung zur Verfügung steht, über welche die bisher benutzte Signaleinrichtung (z. B. Klingel) betätigt worden ist.

Auch bei üblichen Türsprechanlagen ohne Sprechmöglichkeit der Teilnehmer untereinander oder auch bei Türsprechanlagen mit Innensprechwegen wird stets von einer sogenannten "(n+1)-Technologie" ausgegangen, d.h. es ist eine Leitung mehr vorhanden als Klingeltaster vorhanden sind, da diese Leitungszahl der herkömmlichen Installationstechnik für Türöffneranlagen entspricht.

Die notwendigen baulichen Maßnahmen zur Installation der fehlenden Leitungszüge führen zu meist erheblichen Kosten und darüberhinaus während der Installationsarbeiten häufig zu einer Einschränkung der Gebäudenutzung. Dadurch wird in vielen Fällen auf ein Nachrüsten von Gebäude-Telefonanlagen mit einer vorteilhaften TFE-Einrichtung verzichtet. Insbesondere stehen vielfach durch Wohnungsteilungen und Dachraumausbau in bestehenden Gebäuden bei der vorhandenen Installation weniger Leitungen zur Verfügung als Wohneinheiten vorhanden sind. Vielfach wird auch gewünscht, daß Untermieter oder erwachsene Kinder über separate Türklingeln verfügen, so daß Hinweise für Mehrfach-Klingelzeichen entfallen können.

Ausgehend von den Mängeln des Standes der Technik liegt der Erfindung die Aufgabe zugrunde, eine Telekommunikationsanlage der eingangs genannten Gattung zu schaffen, die bei kostengünstigem und technisch einfachem Aufbau die Kommunikation und das Auslösen von Türmelde- bzw. Öffnungsfunktionen zwischen GebäudeTelefonanlage und Türfreisprech-Einrichtung über eine nur zweiadrige Verbindungsleitung ermöglicht.

Diese Aufgabe wird mit den kennzeichnenden Merkmalen des Anspruchs 1 gelöst.

Der Erfindung schließt die Erkenntnis ein, daß sich bei der Installation von Telekommunikationsanlagen, bei denen eine amtsberechtigte Gebäude-Telefonanlage mit einer Türfreisprechanlage kombiniert betrieben wird, eine Reduzierung der Anzahl der erforderlichen Verbindungsleitungen erfolgen kann, für die unterschiedlichen Versorgung bei unterschiedlichen Funktionen der Türsprecheinrichtung unterschiedliche Stromarten (Gleich-/Wechsel-) unter Nutzung von gegebenenfalls unterschiedlichen Polaritäten verwendet werden. Die Beeinflussung kann dabei einerseits von der Türfreisprechanlage her und andererseits aber auch von der übrigen Telekommunikationsanlage her erfolgen, wobei dann auf der Gegenseite die jeweiligen Diskriminatormittel vorzusehen sind, welche die dem jeweiligen Stromart- bzw. Polaritätswechsel zugeordneten Funktionen auslösen. Dabei kommen dann auf der Zweidraht-Leitung die notwendigen Verbindungen für den Gesprächsverkehr bzw. für die Ruf- und Öffnungsfunktionen sequentiell zustande.

Nach der bevorzugten Ausführungsform der erfindungsgemäßen Telekommunikationsanlage ist die Spannungspegel- oder Phasenerkennungs-Stufe der Telefonanlage durch die Taster des Klingeltasten-Feldes der Türfreisprech-Einrichtung (TFE-Einrichtung) beeinflußbar ausgebildet. Die Taster steuern über die Zuschaltung von Dioden die Eingangsspannung der Spannungspegel- oder Phasenerkennungsstufe, welche durch Vergleich der aufbereiteten Eingangsspannung mit einer Spannungsbezugsgröße den, der entsprechenden Klingeltaste in der TFE-Einrichtung zugeordneten Teilnehmer im Bereich der Telefonanlage auswählt. Die entsprechende Ausgangsspannung der Spannungspegel- oder Phasenerkennungsstufe steuert über den Prozessor der Telefonanlage des Gebäudes eine erste Umschalt-Einheit in dieser Anlage an, wobei unter Nutzung der zweiadrigen Verbindungsleitung die TFE-Einrichtung von Wechselspannungs-Versorgung auf Gleichspannungs-Versorgung umgeschaltet wird. Die in der TFE-Einrichtung vorgesehene Baustufe zur Wechsel/Gleichspannungs-Erkennung erfaßt diesen Schaltvorgang, wodurch mittels einer Umschalt-Einheit in der TFE-Einrichtung deren Mikrofon/Lautsprecher-Kombination mit der Gebäude-Telefonanlage verbunden, das Klingeltasten-feld spannungsfrei geschaltet und der Schaltweg für die Türöffner-Einrichtung vorbereitet wird.

Nach Beendigung des Gesprächs mit einem Besucher am Gebäudeeingang wird durch Auflegen des Hörers über einen Prozessor der Gebäude-Telefonanlage oder durch Betätigen eines externen Tasters eine zweite Umschalt-Einheit der Gebäude-Telefonanlage betätigt, wodurch die Polarität der Gleichspannung auf der zweiadrigen Verbindungsleitung durch Abschalten der Telefon-Gleichspannung und Zuschalten einer Gleichspannung mit inverser Polarität gewechselt wird. Die neue Polarität auf der zweiadrigen Verbindungsleitung zwischen Gebäude-Telefonanlage und TFE-Einrichtung bewirkt das Abschalten der Mikrofon/Lautsprecher-Kombination und die Aktivierung des Türöffners am Eingang des Gebäudes. Dies wird schaltungsmäßig bevorzugt dadurch erreicht, daß in der entsprechenden Leitungsverbindung jeweils eine Diode mit unterschiedlicher Polung angeordnet ist.

Entsprechend einer anderen günstigen Ausführungsform der Erfindung erfolgt in der Spannungspegel- oder Phasenerkennungsstufe der Telefonanlage die getrennte Auswertung der beiden Halbwellen einer von dem Versorgungsnetz abgeleiteten Wechselspannung in einer Vergleicherschaltung. Diese Vergleicherschaltung wird eine Mischspannung zugeführt, die aus der Betriebs-Gleichspannung besteht, der bei Nichtbetätigen der Türtaster am Gebäudeeingang eine Wechselspannung überlagert ist. Bei Betätigung der Türtaster zwecks Ruf eines bestimmten Teilnehmers der Telefonanlage wird jeweils durch unterschiedlich gepolte Dioden eine vorbestimmte Halbwelle der Mischspannung kurzgeschlossen oder zumindest in ihrer Amplitude wesentlich verringert. Die jeweilige Mischspannung wird einem spannungsmäßig abgestimmten Komparator zugeführt.

Der Vergleich der durch die fehlenden positiven oder negativen Halbwellen modifizierten Mischspannung mit einer, dem Komparator vorgegebenen und durch spannungsteilung in vorbestimmtem Verhältnis erzeugte Vergleichspannung führt zu einer Veränderung des Spannungspegels am Ausgang des jeweiligen Komparators. Diese Änderung ist durch eine, dem Komparator nachgeordnete Integrator-Stufe in Form einer Spannungsabsenkung erfaßbar und wird als Schwellenspannung zum Setzen einer Kippschaltung genutzt. Die Pegeländerung am Ausgang der Kippschaltung ist durch den Prozessor der Telefonanlage auswertbar und führt zur optischen oder akustischen Information des gewünschten Teilnehmers. Für die praktische Ausführung der Spannungspegel- oder Phasenerkennungs-Stufe ist es günstig, die Schwellwertschaltung wegen des einfachen Aufbaus als Schmitt-Trigger auszubilden.

Gemäß einer vorteilhaften Weiterbildung der Erfindung sind die mit den Tastern gekoppelten und entgegengesetzt gepolten Dioden mit weiteren Dioden parallel zur Versorgungsspannung der Spannungspegel- oder Phasenerkennungsstufe geschaltet, welche seriell jeweils mit einem Vorwiderstand verbunden angeordnet sind, so daß bei Betätigung des Tasters die jeweilige Halbwelle der auszuwertenden Mischspannung nicht vollständig kurzgeschlossen, sondern nur in der Höhe verringert wird. Dadurch kann auf einfache Weise eine Unterscheidung auch zwischen vier betätigten Klingeltastern erfolgen.

Die in der TFE-Einrichtung erforderliche Stufe zur Erkennung der auf der zweiadrigen Verbindungsleitung zwischen Telefonanlage und TFE-Einrichtung vorhandenen Spannungsform ist in vorteilhafter Weise als Gleichrichterschaltung ausgebildet, deren Ansteuerung über einen Kondensator erfolgt. Am Ausgang dieser Gleichrichterschaltung ist eine Umschalteinrichtung vorgesehen, deren Wirkung von der Höhe des in der Schaltung fließenden Stroms abhängig ist. Da Gleichspannungsanteile am Eingang der Wechsel/Gleichspannungs-Erkennungsstufe durch den Kondensator ausgefiltert werden, ist die Umschalteinrichtung nur durch Wechselspannungen aktivierbar und kann dann zu notwendigen Schalthandlungen herangezogen werden. Die Prüfung, ob auf der zweiadrigen Verbindungsleitung zwischen Telefonanlage und TFE-Einrichtung eine Gleich- oder Wechselspannung vorhanden ist, wird dann erforderlich, wenn nach Erkennen des durch Betätigen eines Tasters des Tastenfeldes der TFE-Einrichtung am Gebäudeeingang über der Prozessor der Gebäude-Telefonanlage durch Umschaltern zwecks Vorbereitung des Gesprächs auf der zweiadrigen Verbindungsleitung ein Umschalten von Wechsel- auf Gleichspannung erfolgt und die Mikrofon/Lautsprecher-Kombination der TFE-Einrichtung bzw. der Türöffner an die zweiadrige Verbindungsleitung geschaltet werden muß.

Nach erfolgtem Gespräch wird durch den Teilnehmer der Telefonanlage durch Tastung eine zweite Umschalteinheit betätigt, durch welche die Polarität der Gleichspannung auf der zweiadrigen Verbindungsleitung wechselbar ist. In den Anschlußleitungen für die Mikrofon/Lautsprecherkombination und den Türöffner der TFE-Einrichtung sind auf vorteilhafte Weise Bauelemente vorgesehen, deren Leitfähigkeit von der Polarität der anliegenden Spannung abhängig ist. Die Verwendung von kostengünstigen und langlebigen Bauelementen, vorzugsweise Dioden ist von Vorteil. Durch den Polaritätswechsel ist auf einfache Weise die Mikrofon/Lautsprecherkombination ab- und der Türöffner einschaltbar.

Bei der erfindungsgemäßen Telekommunikationsanlage kehren bei Auflegen der Telefonhörer nach Beendigung des Gesprächsverkehrs alle Umschalt-Einheiten in ihre Grundstellung zurück.

Mit den erfindungsgemäßen Maßnahmen oder ihren Weiterbildungen läßt sich eine TK-Anlage mit Türfreisprecheinrichtung schaffen, bei der die Stromversorgung ausschließlich aus der Anlage erfolgt. Trotz nur zweiadriger Leitungsverbindung zur Torsprechstelle können durch eine entsprechende Halbwellen oder Widerstandscodierung beliebig viele Wohnparteien durch getrennte Klingeln gerufen werden. Bei Auswahl einzelner Teilnehmer durch die Auswertung der Codierung in der Telefonanlage können auch einzelne Apparate der Anlage gerufen werden. Zusätzlich ist auch eine Beleuchtung an der Türsprechanlage betreibbar.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 eine vorteilhafte Ausführungsform der Erfindung als Blockschaltbild in schematisierter Darstellung,
Figur 2 die Ausführungsform einer wesentlichen Baugruppe der erfindungsgemäßen Telekommunikationsanlage,
Figur 3 einer Baugruppe der erfindungsgemäßen Telekommunikationsanlage als Detail von Figur 1 sowie
Figur 4 eine vorteilhafte Variante der in den Figuren 1 und 2 dargestellten Ausführungform.

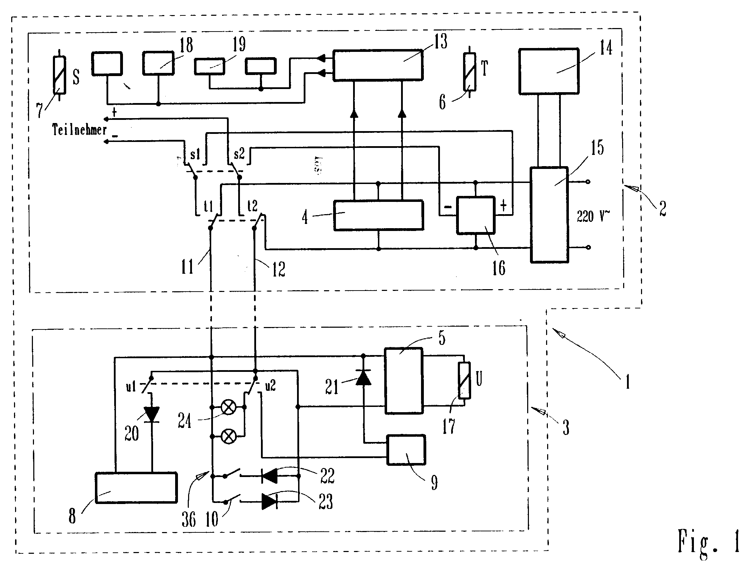

In Figur 1 ist ein vorteilhaftes Ausführungsbeispiel der erfindungsgemäße Telekommunikations-Einrichtung 1, die aus der eigentlichen Telefonanlage 2 und einer TürfreisprechEinrichtung (TFE-Einrichtung) 3 besteht, in schematisierter Form dargestellt. Die Verbindung zwischen der Gebäude-Telefonanlage 2 und der TFE-Einrichtung 3 erfolgt über die Adern 11 und 12 einer zweiadrigen Verbindungsleitung. Um die gewünschte Telekommunikation (Ruf, Gesprächsverkehr und im Bedarfsfall Türöffnung) zwischen einem Teilnehmer der Gebäude-Telefonanlage 2 und einem, am Eingang des Gebäudes befindlichen Besucher auf vorteilhafte Weise über die nur zweiadrige Verbindungsleitung abwickeln zu können, sind in der Telekommunikations-Einrichtung 1 verschieden Baugruppen 4, 5, 10 vorgesehen, durch welche die Stromart- und Polaritätsverhältnisse auf der zweiadrigen Verbindungsleitung sequentiell erkennbar und entsprechend veränderbar sind, um die gewünschten Telekommunikationsfunktionen ausführen zu können.

Die Telefonanlage 2 ist mit einer Spannungspegel- oder Phasenerkennungsstufe 4 versehen, durch welche die Spannungsverhältnisse auf den Leitungen 11 und 12 erfaßt werden, wenn bei einer in Ausgangsposition befindlichen Telekommunikationsanlage 1 ein Taster 10 des Tastenfeldes 36 des TFE-Einrichtung 3 betätigt wird. Durch den Taster 10 wird je nach Polung der entsprechenden Diode 22 oder 23 die positive oder negative Halbwelle der vom Netzteil 15 aus der Netzspannung erzeugten Wechselspannung geringerer Amplitude kurzgeschlossen.

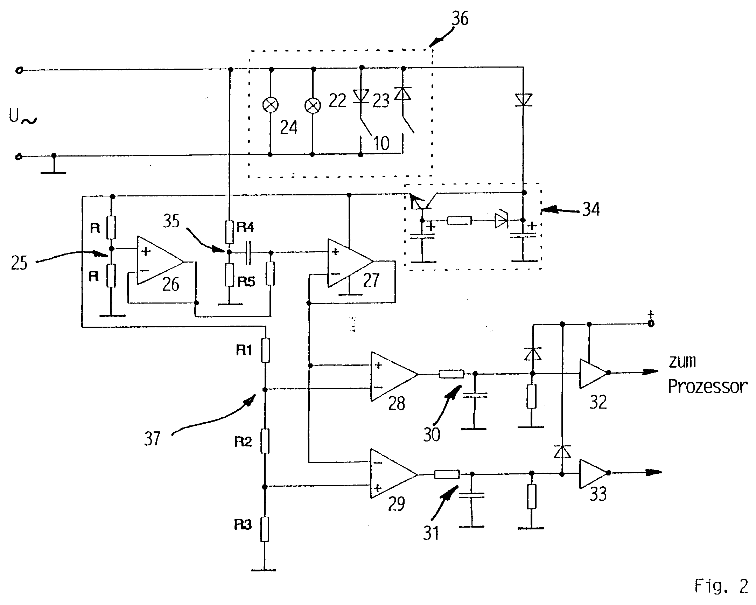

Die Spannungspegel- oder Phasenerkennungsstufe 4 (näher dargestellt in Figur 2) steuert über den Prozessor 13 der Telefonanlage 2 einen Signalgeber 19 beim Teilnehmer 18 und eine erste Umschalt-Einheit 6. Durch deren Betätigung wird über die entsprechenden Kontaktsätze t1 und t2 auf die Adern 11, 12 der zweiadrigen Verbindungsleitung zwischen der Gebäude-Telefonanlage 2 und der TFE-Einrichtung 3 eine zum Gesprächsverkehr erforderliche Gleichspannung gelegt. Dieser Spannungswechsel wird durch die Baustufe 5 zur Wechsel/Gleichspannungs-Erkennung ausgewertet und zur Ansteuerung einer Umschalt-Einheit 17 verwendet. Die dazugehörigen Kontaktsätze u1 und u2 schalten die für den Gesprächsverkehr erforderliche Leitungsverbindung für die Mikrofon/Lautsprecher-Kombination 8 und die Leitungsverbindung für den Türöffner 9 der TFE-Einrichtung 3. Die Polung der Dioden 20, 21 sichert bei vorgegebener Polarität auf den Verbindungsleitungen 11 und 12, daß nur die Mikrofon-Lautsprecher-Kombination 8 mit einer Betriebsspannung versorgt ist.

Nach dem Ende des Gesprächs wird der Türöffner 9 über eine zweite Umschalt-Einheit 7 der Telefonanlage 2 (ausgelöst durch den Prozessor 13 nach separater Tastung des angerufenen Gesprächsteilnehmers) in Betrieb gesetzt. Dies erfolgt in einfacher und zugleich günstiger Weise durch Umpolung der Gleichspannung auf den Adern 11, 12 der zweiadrigen Verbindungsleitung über die entsprechenden Kontaktsätze s1 und s2. Die Umpolung erfolgt durch Abschalten der Sprech-Gleichspannung und Zuschaltung einer, durch eine Gleichrichterstufe 16 erzeugte Gleichspannung entgegengesetzter Polarität. Die Mikrofon/Lautsprecher-Kombination 8 wird dabei gleichzeitig über die Diode 20 spannungsmäßig abgeschaltet. Nach Auflegen des Telefonhörers durch den Teilnehmer der Telefonanlage 2 wird die gesamte Anlage über den Prozessor 13 in den Ausgangszustand überführt und ist für einen erneuten Anruf über die TFE-Einrichtung bereit. Alle Baugruppen der Telefonanlage 2, die für den vorab beschriebenen Sprechbetrieb nur untergeordnete Bedeutung haben, sind in dem Anlagenteil 14 symbolisch dargestellt.

In Figur 2 ist eine Spannungspegel- oder Phasenerkennungsstufe (4 in Figur 1), die innerhalb der Gebäude-Telefonanlage angeordnet ist, in vereinfachter Schaltung dargestellt. Die Betriebspannung für diese Stufe wird über ein Netzteil (Position 15 in Figur 1) aus einer 50 Hz-Wechselspannung erzeugt. Nach Einweg-Gleichrichtung wird die Spannung einer Siebschaltung 34 zugeführt. Die Siebschaltung 34 sorgt dafür, daß die Betriebsgleichspannung nahezu proportional dem Spitzenwert der Wechselspannung folgt, hält aber die Betriebsspannung rippelarm. Die Proportionalität zwischen Wechsel- und Gleichspannung ist erforderlich, da die Wechselspannung stark schwanken kann. Durch den, aus zwei gleichen Widerständen R gebildeten Spannungsteiler 25 steht am Operationsverstärker 26 immer die halbe Betriebsspannung als virtueller Nullpunkt für die anderen Operationsverstärker 27, 28 und 29 zur Verfügung. Der aus den Widerständen R1, R2, R3 gebildete Spannungsteiler 37 erzeugt zwei Referenzspannungen (z.B. 0,7 x U und 0,3 x U), die stets eine Proportionalität zur Betriebsspannung U aufweisen.

Die in einem geeigneten Verhältnis durch die Widerstände R4, R5 des Spannungsteilers 35 heruntergeteilte Wechselspannung wird in der Schaltung durch den Operationsverstärker 27 auf das Niveau der halben Betriebspannung U angehoben. Die positive Halbwelle der so entstandenen Mischspannung wird vom als Komparator ausgebildeten Operationsverstärker 28, die negative Halbwelle von einem Komparator 29 ausgewertet. Bricht der Spitzenwert der positiven Halbwelle, verursacht durch Betätigung des Tasters 10 im Tastenfeld 36 der TFE-Einrichtung zusammen, meldet dies der Komparator 28 (dessen Referenz auf 0,7 x U steht) dadurch, daß die periodisch an seinem Ausgang anstehenden 50 Hz-Impulse ausbleiben. Als Folge davon geht am Ausgang des ihm nachgeschalteten Integrationsgliedes 30 die Spannung zurück. Unterschreitet diese die Schwellenspannung des Schmitt-Triggers 32, so gelangt dessen Ausgangspegel auf "High", was von dem auswertenden Prozessor (Position 13 in Figur 1) als "Taster 10 gedrückt" verstanden wird. Entsprechendes erfolgt bei Betätigung des anderen Tasters für die negative Halbwelle der Mischspannung, wobei der Operationsverstärker 29, der Integrator 31 und der Schmitt-Trigger 33 ansprechen.

Bei längerer Betätigung eines Tasters kann zwar die Betriebsspannung soweit zusammenbrechen, daß die Schaltung nicht mehr arbeitet. Dies bleibt jedoch ohne Auswirkung für den ordnungsgemäßen Ablauf, da der Prozessor das Ausgangssignal des entsprechenden Schmitt-Triggers 32, 33 bereits ausgewertet hat und es im weiteren Verlauf des Vorganges nicht mehr abfragt. Da die Operations-Verstärker 26 bis 29 in einem Versorgungs-Spannungsbereich von ca. 6 bis 30 V arbeiten und alle Spannungen in einem festen Verhältnis zueinander stehen, kann die Spannungspegel- oder Phasenerkennungs-Baustufe auch unter extremen Bedingungen (z.B. beide Lampen 24 im Tastenfeld 36 defekt oder mit falschem Wert eingesetzt, sehr kurze oder sehr lange zweiadrige Verbindungsleitung zwischen Telefonanlage und TFE-Einrichtung) zuverlässig arbeiten.

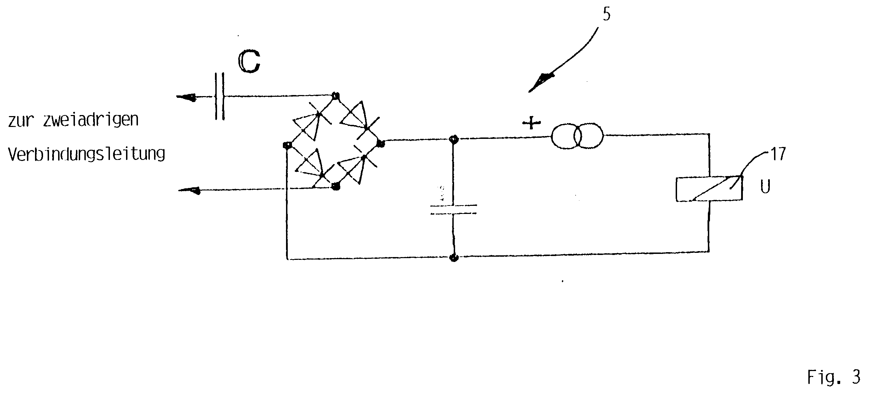

Die in Figur 3 dargestellte Schaltungsanordnung zeigt eine günstige Ausführungsform einer Baustufe 5, die zur Wechsel/Gleichspannungs-Erkennung eingesetzt und innerhalb der TFE-Einrichtung vorgesehen ist. Durch die kapazitive Abtrennung über einen Kondensator C kann die Umschalt-Einrichtung 17 nur dann ansprechen und die entsprechenden Kontaktsätze u1 und u2 (dargestellt in Figur 1) umschalten, wenn am Eingang (verbunden mit den Adern der zweiadrigen Verbindungsleitung) der Baustufe 5 eine Wechselspannung anliegt. Dies kann auch eine Mischspannung sein, deren Wechselanteil einen ausreichenden Effektivwert aufweist, um das Relais U angezogen zu halten.

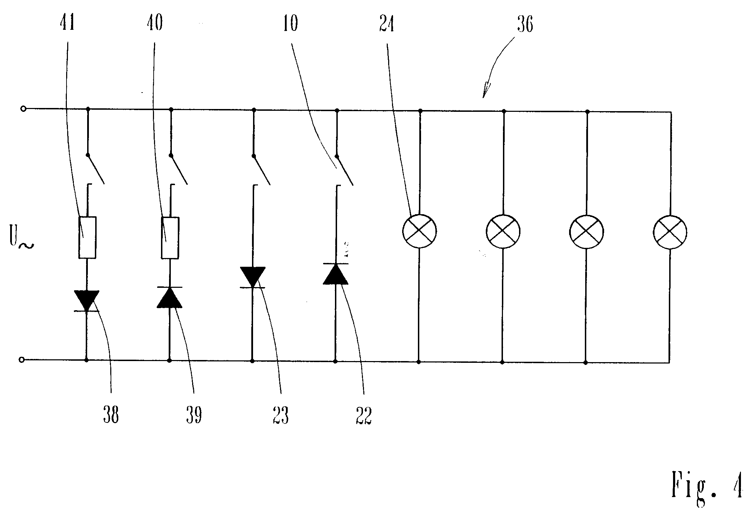

Das in den Figuren 1 und 2 dargestellte Tastenfeld 36 der TFE-Einrichtung besitzt zwei Taster 10, die jeweils mit unterschiedlich gepolten Dioden 22, 23 kombiniert sind. Diese Schaltungsvariante ermöglicht die Ruf-Auswahl von zwei verschiedenen Teilnehmern 18 der Telefonanlage 2. Das in Figur 4 in schematisierter Form dargestellte Tastenfeld 36 der TFE-Einrichtung enthält im Vergleich mit dem Tastenfeld gemäß Figur 1 oder 2 insgesamt vier Taster 10, wobei zwei Taster/Dioden-Serienschaltungen zusätzlich mit jeweils einem Widerstand 40 bzw. 41 erweitert sind. Die Widerstände 40, 41 besitzen vorzugsweise den gleichen Widerstandswert. In Abhängigkeit des jeweils betätigten Tasters 10 sind vier unterschiedliche Spannungszustände erzeugbar. Durch geeignete Modifizierung der in Figur 2 dargestellten Spannungspegel- oder Phasenerkennungs-Baustufe (Verdopplung der Anzahl der Komparatoren, Veränderung der Teilung des Spannungsteilers 37, Veränderung der Schwellenspannung der Schmitt-Trigger usw.) sind vier unterschiedliche Mischspannungen als Folge der Betätigung von vier verschiedenen Tastern (Wahl von vier unterschiedlichen Teilnehmern) durch diese Baustufe unterscheidbar.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Telekommunikationsanlage mit einer Türsprecheinrichtung, die eine Mikrofon/Lautsprecher-Kombination (8), gegebenenfalls einen elektrisch betätigbaren Türöffner (9) und einem, mindestens einen Klingeltaster (10) aufweist,
**dadurch gekennzeichnet,**
daß zur Verbindung der Türsprecheinrichtung mit der übrigen Telekommunikationsanlage mittels zweier Leitungsadern erste Schaltmittel vorgesehen sind, welche die beiden Leitungsadern der Türsprecheinrichtung für den Sprechbetrieb von der sonst vorhandenen Versorgung mit Wechselspannung auf eine Versorgung mit Gleichspannung umschalten, welche gegebenenfalls die Sprechwechselspannung überlagert enthält, wobei in der Türsprecheinrichtung zweite Schaltmittel vorgesehen sind, welche bei vorhandener Versorgungsgleichspannung die Mikrofon/Lautsprecher-Kombination mit den Leitungsadern verbinden.

2. Telekommunikationsanlage nach Anspruch 1, **dadurch gekennzeichnet,** daß in der Türsprecheinrichtung eine durch den Klingeltaster betätigbare Schaltungsüberbrückung vorgesehen ist, welche die Versorgungswechselspannung bezüglich mindestens einer ihrer Polaritäten für mindestens einzelne Halbwellen niederohmig überbrückt, wobei in der übrigen Telekommunikationsanlage Diskriminatormittel vorgesehen sind, welche bei niederohmiger Überbrückung mindestens einzelner Halbwellen mindestens einer Polarität der Versorgungswechselspannung eine Meldeeinrichtung nach Art einer Türklingel aktivieren.

3. Telekommunikationsanlage nach Anspruch 2, **dadurch gekennzeichnet,** daß zwei Klingeltaster vorgesehen sind, von denen bei Betätigung jeder eine der beiden Polaritäten der Versorgungswechselspannung kurzschließt.

4. Telekommunikationsanlage nach Anspruch 3, **dadurch gekennzeichnet,** daß mehrere Klingeltaster vorgesehen sind, die durch niederohmige zyklische Überbrückung unterschiedlicher Folgen von Halbwellen unterschiedlicher Polarität und/oder mit unterschiedlichen niederohmigen Widerständen charakteristische Signalfolgen erzeugen.

5. Telekommunikationsanlage nach einem der vorangehenden Ansprüche, **dadurch gekennzeichnet,** daß in der Türsprecheinrichtung eine Polaritätsdiskriminatorschaltung vorgesehen ist, welche bei Umpolung der Versorgungsgleichspannung gegenüber der Polung bei Sprechbetrieb einen elektrischen Türöffner betätigt und daß mit der übrigen Telekommunikationsanlage Betätigungsmittel für den Türöffner mit einer Umpolschaltung vorgesehen sind, welche die Versorgungsgleichspannung gegenüber der Polung bei Sprechbetrieb umpolen.

6. Telekommunikationsanlage nach einem der vorangehenden Ansprüche**, dadurch gekennzeichnet,** daß die Versorgungswechselspannung gleichzeitig als Stromquelle für eine Beleuchtungseinrichtung der Türsprechanlage dient.

7. Telekommunikationsanlage nach einem der vorangehenden Ansprüche, **dadurch gekennzeichnet,** daß die Auswertung der durch Betätigung eines Klingeltasters erzeugten Mischspannung, bestehend aus einer Wechselspannung mit variablem Gleichspannungsanteil mittels mindestens zweier Komparatoren (28, 29) erfolgt, welche diese mit einem Gleichspannungspotential vergleichen.

8. Telekommunikationsanlage nach Anspruch 7, **dadurch gekennzeichnet,** daß die Komparatoren (28, 29) als Operationsverstärker ausgebildet sind.

9. Telekommunikationsanlage nach Anspruch 2, **dadurch gekennzeichnet,** daß die durch einen Klingeltaster betätigte Schaltungsüberbrückung Dioden (38, 39) mit einem zusätzlichen Strombegrenzungswiderstand (40, 41) aufweist.

10. Telekommunikationsanlage nach Anspruch 8**, dadurch gekennzeichnet,** daß zur Erzeugung der Vergleichsspannung für die Komparatoren (28, 29) aus der Betriebsspannung der Spannungspegel- oder Phasenerkennungs-Baustufe (4) ein Spannungsteiler (35, 37) vorgesehen sind.

11. Telekommunikations-Einrichtung nach Anspruch 2, **dadurch gekennzeichnet,** daß die integrierte Ausgangsspannung der Komparatoren (28, 29) eine Eingangs-Schwellenspannung einer Schwellwertdiskriminator-Schaltung (32, 33) bildet.

12. Telekommunikationsanlage nach Anspruch 9, **dadurch gekennzeichnet,** daß die Schwellwertdiskriminatorschaltungen (32, 33) als Schmitt-Trigger ausgebildet sind.

13. Telekommunikationsanlage nach Anspruch 1, **dadurch gekennzeichnet,** daß Umschalt-Einheiten (6, 7) als Relais ausgebildet sind.

14. Telekommunikationsanlage nach Anspruch 1, **dadurch gekennzeichnet,** daß die Stufe (5) zur Wechsel/Gleichspannungs-Erkennung als Gleichrichterschaltung ausgebildet ist, deren Ansteuerung über einen Kondensator erfolgt.

15. Telekommunikationsanlage nach Anspruch 14, **dadurch gekennzeichnet,** daß die zweiten Schaltmittel (5) zur Wechsel/Gleichspannungs-Erkennung eine Umschalteinrichtung (17) aufweisen, durch deren Betätigung die zum Betrieb notwendige Gleichspannungsversorgung der Mikrofon/Lautsprecher-Kombination (8) der Türfreisprech-Einrichtung (3) zuschaltbar ist.

16. Telekommunikationsanlage nach Anspruch 15, **dadurch gekennzeichnet,** daß die Umschalteinrichtung (17) als Relais ausgebildet ist.

17. Telekommunikationsanlage nach Anspruch 1, **dadurch gekennzeichnet,** daß in den Anschlußleitungen zwischen den Adern (11, 12) der zweiadrigen Verbindungsleitung und dem Türöffner (9) bzw. der Mikrofon/Lautsprecher-Kombination (8) der TFE-Einrichtung (3) jeweils ein Schaltelement (20, 21) mit polungsabhängiger Leitfähigkeit vorgesehen ist.

18. Telekommunikationsanlage nach Anspruch 17, **dadurch gekennzeichnet,** daß das Schaltelement (20, 21) aus einer Diode besteht.
